# EUROPEAN PATENT APPLICATION

(11) **EP 4 007 289 A1**
(43) Date of publication of application: **01.06.2022**
(21) Application number: 20862578.0
(22) Date of filing: 17.07.2020
(51) Int. Cl.: H04N 21/437

(54) **VIDEO UPLOADING METHOD AND APPARATUS, ELECTRONIC DEVICE, AND STORAGE MEDIUM**

(30) Priority: 11.09.2019 CN 201910860878
(71) Applicant: Beijing Dajia Internet Information Technology Co., Ltd., Beijing 100085 (CN)
(72) Inventor: WEN, Xing, Beijing 100085 (CN); ZHENG, Yunfei, Beijing 100085 (CN); YU, Bing, Beijing 100085 (CN); WANG, Xiaonan, Beijing 100085 (CN); CHEN, Min, Beijing 100085 (CN); HUANG, Yue, Beijing 100085 (CN); CHEN, Yucong, Beijing 100085 (CN); HUANG, Xiaozheng, Beijing 100085 (CN); ZHAO, Mingfei, Beijing 100085 (CN); GUO, Lei, Beijing 100085 (CN); HUANG, Bo, Beijing 100085 (CN); ZHANG, Jiejun, Beijing 100085 (CN); CHEN, Bin, Beijing 100085 (CN)
(74) Representative: Yang, Shu
(86) International application number: PCT/CN2020/102752
(87) International publication number: WO 2021/047287

(57) **Abstract**

The present disclosure relates to a video uploading method and apparatus, an electronic device, and a storage medium, belonging to the field of video processing technology. In the present disclosure, before encoding a target video, a client determines an encoding complexity of the target video, and determines, according to a difference between the encoding complexity and a reference threshold, a target encoding parameter for encoding the target video, the target encoding parameter being an encoding parameter matching the encoding complexity of the target video. The client encodes the target video according to the determined target encoding parameter, so that the determined encoding parameter is better matched with the target video, thereby achieving the technical solution of adjusting the encoding parameter of the target video according to the encoding complexity of the target video, and providing a better video encoding effect.

## Description

### CROSS-REFERENCE TO RELATED APPLICATION

The present disclosure claims priority to Chinese Patent Application No. 201910860878.5, filed on September 11, 2019 and entitled "VIDEO UPLOAD METHOD AND APPARATUS, ELECTRONIC DEVICE, AND STORAGE MEDIUM", which is incorporated herein by reference in its entirety.

### TECHNICAL FIELD

The present disclosure relates to the technical field of video processing, and in particular, to a video upload method and apparatus, an electronic device, and a storage medium.

### BACKGROUND

In recent years, as the Internet rapidly develops, websites or applications mainly related to short user-generated content (UGC) videos have rapidly sprung up, and a growing number of users have become creators of network content.

Generally, a process of sharing a video on a UGC platform by a user includes uploading, transcoding, and delivering the video. However, due to the large video files, a client encodes the video before uploading the video. In the related art, an encoding parameter for encoding the video by the client is configured based on historical experience. For a complex video that involves vigorous motion, complex textures, and frequent scene changes, if the configured encoding parameter have a larger compression rate for the video, a video bitrate is excessively low, and video quality is reduced. For a simple video that involves gentle motion, smooth texture, and a single static scene, if the configured encoding parameter have a smaller compression rate for the video, a video bitrate is excessively high, encoding redundancy exists, a success rate of uploading the video is reduced, and a video encoding effect is bad.

### SUMMARY

The present disclosure provides a video upload method and apparatus, an electronic device, and a storage medium to improve a video encoding effect. The technical solutions of the present disclosure are as follows.

According to one aspect, a video upload method is provided. The method is applied to a client and includes:
determining encoding complexity of a target video;
determining a target encoding parameter corresponding to difference information based on the difference information between the encoding complexity and a reference threshold; and
encoding the target video based on the target encoding parameter and uploading an encoded target video to a server.

In a possible implementation, the determining the encoding complexity of the target video may include:
obtaining hardware encoded data of the target video;
decoding the hardware encoded data of the target video to obtain original video data of the target video; and
determining encoding complexity during encoding the original video data of the target video.

In a possible implementation, the determining the encoding complexity during encoding the original video data of the target video may include:
obtaining an initial encoding parameter for the target video;
performing inter-frame predictive encoding and intra-frame predictive encoding on the target video based on the initial encoding parameter; and
determining the encoding complexity of the target video based on an inter-frame predictive encoding result and intra-frame predictive encoding result.

In a possible implementation, the initial encoding parameter may be set based on historical encoding parameters.

In a possible implementation, the determining the encoding complexity of the target video based on the inter-frame predictive encoding result and intra-frame predictive encoding result may include:
determining inter-frame predictive encoding complexity of the target video based on the inter-frame predictive encoding result;
determining intra-frame predictive encoding complexity of the target video based on the intra-frame predictive encoding result; and
performing weighted summation on the inter-frame predictive encoding complexity and intra-frame predictive encoding complexity of the target video based on a preset first weight of the inter-frame predictive encoding complexity and a preset second weight of the intra-frame predictive encoding complexity to obtain the encoding complexity of the target video.

In a possible implementation, the determining, based on the difference between the encoding complexity and the reference threshold, the target encoding parameter corresponding to the difference may include:
obtaining the target encoding parameter corresponding to the difference information from a plurality of encoding parameters based on the difference information between the encoding complexity and the reference threshold.

In a possible implementation, the obtaining, based on the difference between the encoding complexity and the reference threshold, the target encoding parameter corresponding to the difference from the plurality of encoding parameters may include:
obtaining difference intervals corresponding to the plurality of encoding parameters; and
determining an encoding parameter corresponding to a difference interval including the difference information as the target encoding parameter.

In a possible implementation, before the determining the target encoding parameter corresponding to the difference information based on the difference information between the encoding complexity and the reference threshold, the method may further include:
determining a difference value between the encoding complexity and the reference threshold as the difference information between the encoding complexity and the reference threshold.

According to one aspect, a video upload apparatus is provided. The apparatus is applied to a client and includes:
a determining unit, configured to determine encoding complexity of a target video;
a comparison unit, configured to determine a target encoding parameter corresponding to difference information based on the difference information between the encoding complexity and a reference threshold; and
an upload unit, configured to encode the target video based on the target encoding parameter and upload an encoded target video to a server.

In a possible implementation, the determining unit may be configured to obtain hardware encoded data of the target video; decode the hardware encoded data of the target video to obtain original video data of the target video; and determine encoding complexity during encoding the original video data of the target video.

In a possible implementation, the determining unit may be configured to obtain an initial encoding parameter for the target video; perform inter-frame predictive encoding and intra-frame predictive encoding on the target video based on the initial encoding parameter; and determine the encoding complexity of the target video based on an inter-frame predictive encoding result and an intra-frame predictive encoding result.

In a possible implementation, the initial encoding parameter may be set based on historical encoding parameters.

In a possible implementation, the determining unit may be configured to determine inter-frame predictive encoding complexity of the target video based on the inter-frame predictive encoding result; determine intra-frame predictive encoding complexity of the target video based on the intra-frame predictive encoding result; and perform weighted summation on the inter-frame predictive encoding complexity and intra-frame predictive encoding complexity of the target video based on a preset first weight of the inter-frame predictive encoding complexity and a preset second weight of the intra-frame predictive encoding complexity to obtain the encoding complexity of the target video.

In a possible implementation, the comparison unit may be configured to obtain the target encoding parameter corresponding to the difference information from a plurality of encoding parameters based on the difference information between the encoding complexity and the reference threshold.

In a possible implementation, the comparison unit may be configured to obtain a difference interval corresponding to each encoding parameter; and determine an encoding parameter corresponding to a difference interval including the difference information as the target encoding parameter.

In a possible implementation, the video upload apparatus may further include:
a difference determining unit, configured to determine a difference value between the encoding complexity and the reference threshold as the difference information between the encoding complexity and the reference threshold.

According to one aspect, a client is provided, including:
a processor; and
a memory configured to store an instruction executable by the processor; wherein
the processor is configured to perform the following steps:
determining encoding complexity of a target video;
determining a target encoding parameter corresponding to difference information based on the difference information between the encoding complexity and a reference threshold; and
encoding the target video based on the target encoding parameter and uploading an encoded target video to a server.

According to one aspect, a storage medium is provided. When an instruction in the storage medium is executed by a processor of a client, the client is enabled to perform the following steps:
determining encoding complexity of a target video;
determining a target encoding parameter corresponding to difference information based on the difference information between the encoding complexity and a reference threshold; and
encoding the target video based on the target encoding parameter and uploading an encoded target video to a server.

According to a fifth aspect of the embodiments of the present disclosure, a computer program product is provided. When the computer program product is executed by a processor of a client, the client is enabled to perform the following steps:
determining encoding complexity of a target video;
determining a target encoding parameter corresponding to difference information based on the difference information between the encoding complexity and a reference threshold; and
encoding the target video based on the target encoding parameter and uploading an encoded target video to a server.

The technical solutions provided by the embodiments of the present disclosure have at least the following beneficial effects: before encoding the target video, the client determines the encoding complexity of the target video, and determines the target encoding parameter for encoding the target video based on the difference between the encoding complexity and the reference threshold. The target encoding parameter is an encoding parameter that matches the encoding complexity of the target video. The client encodes the target video based on the determined target encoding parameter, which can make the determined encoding parameter match more the target video, and realize the technical solution of adjusting the encoding parameter for the target video based on the encoding complexity of the target video, and the video encoding effect is better.

It should be understood that the foregoing general description and the following detailed description are only exemplary and explanatory, and should not be construed as a limitation to the present disclosure.

### BRIEF DESCRIPTION OF THE DRAWINGS

The accompanying drawings, which are incorporated in and constitute a part of the specification, illustrate the embodiments of the present disclosure, together with the specification, serve to explain the principles of the present disclosure, and do not constitute an undue limitation to the present disclosure.
FIG. 1 is a flowchart of a video upload method according to an exemplary embodiment;
FIG. 2a is another flowchart of a video upload method according to an exemplary embodiment;
FIG. 2b is a flowchart of calculating encoding complexity in the embodiment shown in FIG. 2a.
FIG. 3 is a block diagram of a video upload apparatus according to an exemplary embodiment;
FIG. 4 is a block diagram of a client according to an exemplary embodiment;
FIG. 5 is a block diagram of a video upload apparatus according to an exemplary embodiment; and
FIG. 6 is a block diagram of another video upload apparatus according to an exemplary embodiment.

### DETAILED DESCRIPTION

To make those of ordinary skill in the art better understand the technical solutions of the present disclosure, the following clearly and completely describes the technical solutions in the embodiments of the present disclosure with reference to the accompanying drawings.

It should be noted that the terms "first", "second", and so on in the specification and claims of the present disclosure and in the accompanying drawings are intended to distinguish between similar objects but do not necessarily indicate a specific order or sequence. It should be understood that the data used in such a way may be exchanged under proper conditions to make it possible to implement the described embodiments of the present disclosure in sequences except those illustrated or described herein. The implementations described in the following exemplary embodiments do not represent all implementations consistent with the present disclosure. On the contrary, they are merely embodiments of an apparatus and a method detailed in the appended claims and consistent with some aspects of the present disclosure.

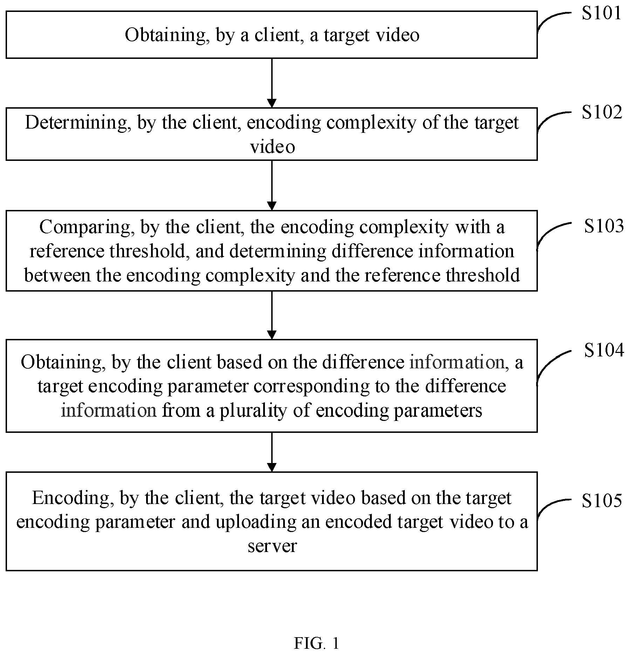

FIG. 1 is a flowchart of a video upload method according to an exemplary embodiment. As shown in FIG. 1, the video upload method is applied to a client and includes the following steps.

In step S101, a target video is obtained by the client.

Optionally, the client may import the target video from a local album. Alternatively, the target video may be shot by a user through the client after a video upload application obtains a shooting permission. Alternatively, the client may obtain the target video from the Internet. This is not limited in this embodiment of the present disclosure. Optionally, a format of the target video may be AVI, MP4, WMA, or RMVB.

In step S102, encoding complexity of the target video is determined by the client.

Optionally, the client may use a video predictive encoding algorithm to calculate the encoding complexity of the target video.

In step S103, the encoding complexity is compared by the client with a reference threshold, and difference information between the encoding complexity and the reference threshold is determined.

In step S104, a target encoding parameter corresponding to the difference information is obtained by the client from a plurality of encoding parameters based on the difference information.

Optionally, the encoding parameters may be preset by the user. In some other embodiments, the encoding parameters may be generated by the client based on historical encoding processes. This is not limited in this embodiment of the present disclosure.

In step S105, the target video is encoded by the client based on the target encoding parameter, and an encoded target video is uploaded to a server.

It can be learned that in the present disclosure, before encoding the target video, the client determines the encoding complexity of the target video, and determines the target encoding parameter for encoding the target video based on the difference between the encoding complexity and the reference threshold. The target encoding parameter is an encoding parameter that matches the encoding complexity of the target video. The client encodes the target video based on the determined target encoding parameter, which can make the determined encoding parameter match more target video, and realize the technical solution of adjusting the encoding parameter for the target video based on the encoding complexity of the target video, and the video encoding effect is better.

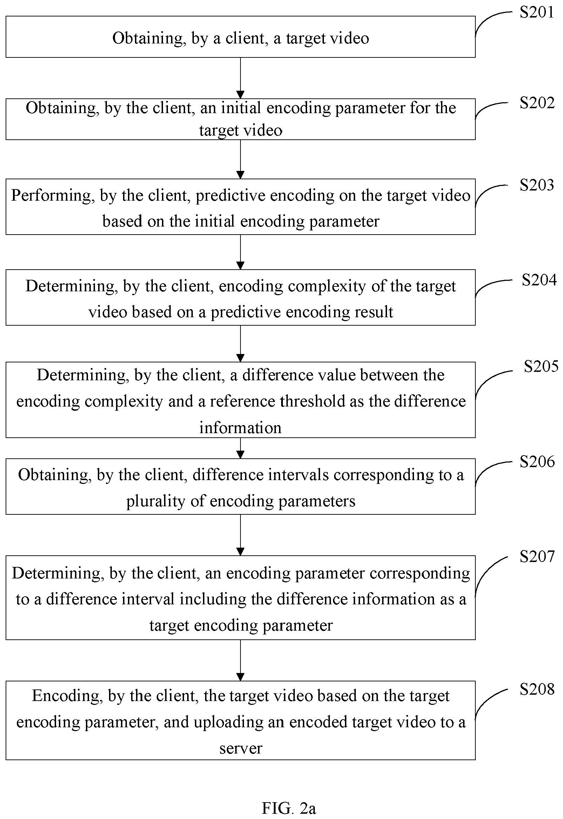

FIG. 2a is another flowchart of a video upload method according to an exemplary embodiment. As shown in FIG. 2a, the video upload method is applied to a client and includes the following steps.

In step S201, a target video is obtained by the client.

It can be understood that when shooting the target video, a shooting device performs hardware encoding on the target video. Therefore, in this step, in addition to obtaining the target video, the client may also obtain hardware encoded data of the target video from video information of the target video.

For the step in which the target video is obtained by the client, refer to step S101. Details are not described herein again.

In step S202, an initial encoding parameter for the target video is obtained by the client.

In a possible implementation, the initial encoding parameter may be preset based on historical encoding parameters.

For example, the client may set the initial encoding parameter for the target video based on the historical encoding parameters, where the historical encoding parameters are set by the client for historically uploaded videos. The client may determine a historical encoding parameter of a historically uploaded video whose hardware encoded data is the same as the hardware encoded data of the target video from a plurality of historically uploaded videos, and takes the historical encoding parameter as the initial encoding parameter.

Alternatively, the client may take an average of the historical encoding parameters as the initial encoding parameter for the target video.

Alternatively, the client may use a historical encoding parameter of a last uploaded video as the initial encoding parameter for the target video.

The foregoing examples are merely for ease of understanding. In some other possible implementations, the client may obtain the initial encoding parameter for the target video in other ways. This is not limited in this embodiment of the present disclosure.

In step S203, the client performs predictive encoding on the target video based on the initial encoding parameter.

The predictive encoding is performed to check whether the initial encoding parameter is an appropriate encoding parameter for the target video.

In a possible implementation, the client may perform predictive encoding on a first target number of image frames of the target video to obtain a predictive encoding result, where the predictive encoding result is used to indicate the encoding complexity during encoding the target video based on the initial encoding parameter.

In this implementation, the client does not need to perform predictive encoding on all image frames of the target video, but only needs to perform encoding on the target number of image frames. This improves a speed of obtaining the predictive encoding result and reduces a calculation amount of the client.

For example, if the initial encoding parameter is 200 KB/s, the client captures first 20 image frames from the target video, and encodes the 20 image frames based on the initial encoding parameter of 200 KB/s to obtain a predictive encoding result of first 20 encoded image frames. The client uses the predictive encoding result of the first 20 image frames to represent the predictive encoding result of the target video.

In step S204, encoding complexity of the target video is determined by the client based on the predictive encoding result.

Optionally, the encoding complexity may be represented by duration of an encoding process or a peak signal-to-noise ratio before and after encoding.

For example, the encoding complexity is represented by duration of the predictive encoding process. The client determines time consumed by the predictive encoding performed on the target video by using the initial encoding parameter, and determines the encoding complexity of the target video based on the time consumed by the predictive encoding and duration of the target video. For example, the client uses the initial encoding parameter of 200 KB/s to perform the predictive encoding on the target video, and the duration of the target video is 30s. If the predictive encoding performed by the client on the target video consumes 20s, the client divides the duration 30s of the target video by the time 20s consumed by the predictive encoding to obtain the encoding complexity 1.5 of the target video.

Alternatively, the client may perform predictive encoding on the first target number of image frames of the target video, and take time consumed by the predictive encoding as the encoding complexity of the target video. For example, the client captures the first 20 image frames from the target video, performs predictive encoding on the 20 image frames, and takes the time consumed by the predictive encoding performed on the 20 image frames, 3.5s, as the encoding complexity of the target video.

For example, the encoding complexity is represented by the peak signal-to-noise ratio. The client obtains a first number of reference image frames from an initial encoded video which is obtained by performing the predictive encoding on the target video by using the initial encoding parameter, and obtains initial image frames corresponding to the reference image frames from the target video. The client determines a mean squared error between pixel values of each reference image frame and pixel values of a corresponding initial image frame, and obtains a peak signal-to-noise ratio between the reference image frame and the initial image frame based on the mean squared error. The client adds the peak signal-to-noise ratios between the first number of reference image frames and the initial image frames, divides a sum by the first number, and obtains a reciprocal of a quotient to obtain the encoding complexity of the target video. A higher signal-to-noise ratio indicates that the reference image frame is closer to the initial image frame. That is, encoding complexity of the initial image is lower. A lower signal-to-noise ratio indicates that the reference image frame is farther away from the initial image frame. That is, the encoding complexity of the initial image is higher. The client uses the reciprocal of the quotient obtained by dividing the sum of the peak signal-to-noise ratios between the first number of reference image frames and the initial image frames by the first number to obtain the encoding complexity of the target video. For example, the client obtains three reference image frames from the initial encoded video, and determines three initial image frames in the target video that correspond to the three reference image frames. The client determines a mean squared error between pixel values of each of the three reference image frames and pixel values of a corresponding initial image frame, and obtains signal-to-noise ratios of 20 dB, 30 dB, and 40 dB between the three reference image frames and the three initial image frames based on the mean squared error. The client divides a sum of the signal-to-noise ratios of 20 dB, 30 dB, and 40 dB by the first number 3 and obtains a reciprocal of a quotient to obtain the encoding complexity 0.03 for the target video.

In addition, in steps S203 and S204, the client may first decode the hardware encoded data of the target video to obtain original video data of the target video; and then perform intra-frame predictive encoding and inter-frame predictive encoding on the original video data of the target video based on the initial encoding parameter, and calculate the encoding complexity of the target video based on predictive encoding results.

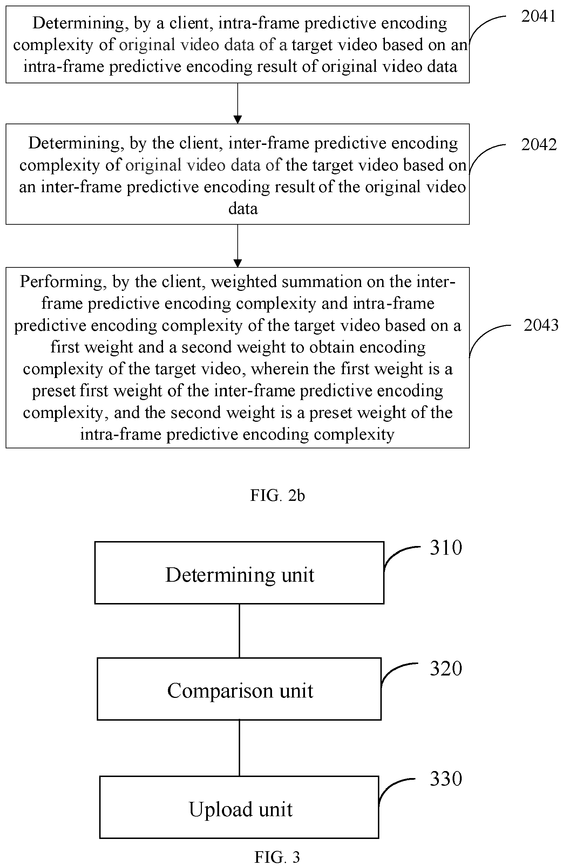

Specifically, referring to FIG. 2b, the encoding complexity may be obtained by performing the following steps.

In step S2041, intra-frame predictive encoding complexity of the target video is determined by the client based on an intra-frame predictive encoding result of the original video data.

For example, the client obtains a second number of initial image frames from the target video, performs the intra-frame predictive encoding on the second number of initial image frames, and counts total duration of the intra-frame predictive encoding performed on the second number of initial image frames. Optionally, the second number of initial image frames are the image frames of the same duration spaced in the target video. The client divides the total duration of the intra-frame predictive encoding by the second number to obtain the intra-frame predictive encoding complexity of the target video.

In step S2042, inter-frame predictive encoding complexity of the target video is determined by the client based on an inter-frame predictive encoding result of the original video data.

For example, the client obtains the second number of initial image frames from the target video, performs inter-frame predictive encoding on the second number of initial image frames, and counts total duration of the inter-frame predictive encoding performed on the second number of initial image frames. Optionally, the second number of initial image frames are the image frames of the same duration spaced in the target video. The client divides the total duration of the inter-frame predictive encoding by the second number to obtain the inter-frame predictive encoding complexity of the target video.

In step S2043, weighted summation is performed by the client on the inter-frame predictive encoding complexity and intra-frame predictive encoding complexity of the target video based on a preset first weight of the inter-frame predictive encoding complexity and a preset second weight of the intra-frame predictive encoding complexity to obtain the encoding complexity of the target video.

In a possible implementation, the first weight and the second weight are set based on a specific display scenario of the target video. For example, if the target video is delivered to a terminal device with a small screen such as a mobile phone or a tablet computer, a user is insensitive to image details when watching the video. Therefore, the weight of the inter-frame predictive encoding complexity can be increased, and the weight of the intra-frame predictive encoding complexity can be reduced. On the contrary, if the target video needs to be displayed on a larger light-emitting diode (LED) screen, a user is sensitive to image details. Therefore, the weight of the inter-frame predictive encoding complexity can be reduced, and the weight of the intra-frame predictive encoding complexity can be increased.

Alternatively, the first weight and the second weight may be set based on empirical values.

In step S205, a difference value between the encoding complexity and a reference threshold is determined as the difference information between the encoding complexity and a reference threshold by the client.

The reference threshold may be preset based on statistical data of video quality, an upload success rate and an encoded target video bitrate.

For example, if the inter-frame predictive encoding complexity of the target video is 2, the intra-frame predictive encoding complexity of the target video is 5, the preset first weight is 0.6, the preset second weight is 0.4, and the reference threshold is 2.5, the encoding complexity of the target video is 2 × 0.6 + 5 × 0.4 = 3.2, and the difference between the encoding complexity and the reference threshold is 0.7.

In step S206, difference intervals corresponding to a plurality of encoding parameters are obtained by the client.

Each encoding parameter contains a plurality of parameters used to encode the target video, such as a frame structure, a profile, a coding unit (CU), a transform unit (TU), and a prediction unit (PU).

In step S207, an encoding parameter corresponding to a difference interval including the difference information is determined by the client as a target encoding parameter.

In this embodiment, each encoding parameter corresponds to a difference interval. As shown in table 1, encoding parameters 1, 2, ..., and M correspond to difference intervals [0,0.5), [0.5,1) ..., and [a, b), respectively. When the difference information between the encoding complexity obtained by the client and the reference threshold falls within a difference interval in table 1, an encoding parameter corresponding to the difference interval is the target encoding parameter.

For example, the difference calculated in step S205 is 0.7. Referring to table 1, 0.7 ∈ [0.5,1*)*. Therefore, the encoding parameter 2 is determined as the target encoding parameter.

**Table 1**

| Encoding parameter identifier | Difference interval |
|---|---|
| 1 | [0,0.5) |
| 2 | [0.5,1) |
| ... | ... |
| M | [a,b) |

In step S208, the target video is encoded by the client based on the target encoding parameter, and the encoded target video is uploaded to a server.

In addition, after the client uploads the target video to the server, the server can detect whether a user's viewing request is received, and the viewing request contains a type of the user, such as normal user or advanced user. The server transcodes the target video based on the type of the user and pushes a transcoded video to a content delivery network (CDN) server such that a client of the user can obtain the video from the CDN server. For example, if the user that sends the viewing request is a normal user, the server transcodes the target video to an X.264 format. If the user that sends the viewing request is an advanced user, the server transcodes the target video to an X.265 format. In comparison with videos in the X.264 format, videos in the X.265 format have higher image quality, and a file size can be reduced by about 50%, thereby improving experience for advanced users.

In the technical solutions provided by the present disclosure, before encoding the target video, the client determines the encoding complexity of the target video, and determines the target encoding parameter for encoding the target video based on the difference between the encoding complexity and the reference threshold. The target encoding parameter is an encoding parameter that matches the encoding complexity of the target video. The client encodes the target video based on the determined target encoding parameter, which can make the determined encoding parameter match more target video, and realize the technical solution of adjusting the encoding parameter for the target video based on the encoding complexity of the target video, and the video encoding effect is better.

FIG. 3 is a block diagram of a video upload apparatus according to an exemplary embodiment. Referring to FIG. 3, the apparatus includes a determining unit 310, a comparison unit 320, and an upload unit 330.

The determining unit 310 is configured to determine encoding complexity of a target video.

The comparison unit 320 is configured to determine a target encoding parameter corresponding to difference information based on the difference information between the encoding complexity and a reference threshold.

The upload unit 330 is configured to encode the target video based on the target encoding parameter and upload an encoded target video to a server.

The technical solutions provided by this embodiment of the present disclosure have at least the following beneficial effects: before encoding the target video, an apparatus determines the encoding complexity of the target video, and determines the target encoding parameter for encoding the target video based on the difference between the encoding complexity and the reference threshold. The target encoding parameter is an encoding parameter that matches the encoding complexity of the target video. The apparatus encodes the target video based on the determined target encoding parameter, which can make the determined encoding parameter match more the target video, and realize the technical solution of adjusting the encoding parameter for the target video based on the encoding complexity of the target video, and the video encoding effect is better.

In a possible implementation, the determining unit 310 may be configured to obtain hardware encoded data of the target video; encode the hardware encoded data of the target video to obtain original video data of the target video; and determine encoding complexity during encoding the original video data of the target video.

In a possible implementation, the determining unit 310 may be configured to obtain an initial encoding parameter of the target video; perform inter-frame predictive encoding and intra-frame predictive encoding on the target video based on the initial encoding parameter; and determine the encoding complexity of the target video based on an inter-frame predictive encoding result and intra-frame predictive encoding result.

In a possible implementation, the initial encoding parameter may be set based on historical encoding parameters.

In a possible implementation, the determining unit 310 may be configured to determine inter-frame predictive encoding complexity of the target video based on the inter-frame predictive encoding result; determine intra-frame predictive encoding complexity of the target video based on the intra-frame predictive encoding result; and perform weighted summation on the inter-frame predictive encoding complexity and intra-frame predictive encoding complexity of the target video based on a preset first weight of the inter-frame predictive encoding complexity and a preset second weight of the intra-frame predictive encoding complexity to obtain the encoding complexity of the target video.

In a possible implementation, the comparison unit 320 may be configured to obtain the target encoding parameter corresponding to the difference information from a plurality of encoding parameters based on the difference information between the encoding complexity and the reference threshold.

In a possible implementation, the comparison unit 320 may be configured to obtain a difference interval corresponding to each encoding parameter; and determine an encoding parameter corresponding to a difference interval including the difference information as the target encoding parameter.

In a possible implementation, the video upload apparatus may further include:
a difference determining unit, configured to determine the difference information between the encoding complexity and the reference threshold.

Specific manners of operations performed by the modules in the apparatus in the foregoing embodiment have been described in detail in the embodiments of the related method, and details are not described herein again.

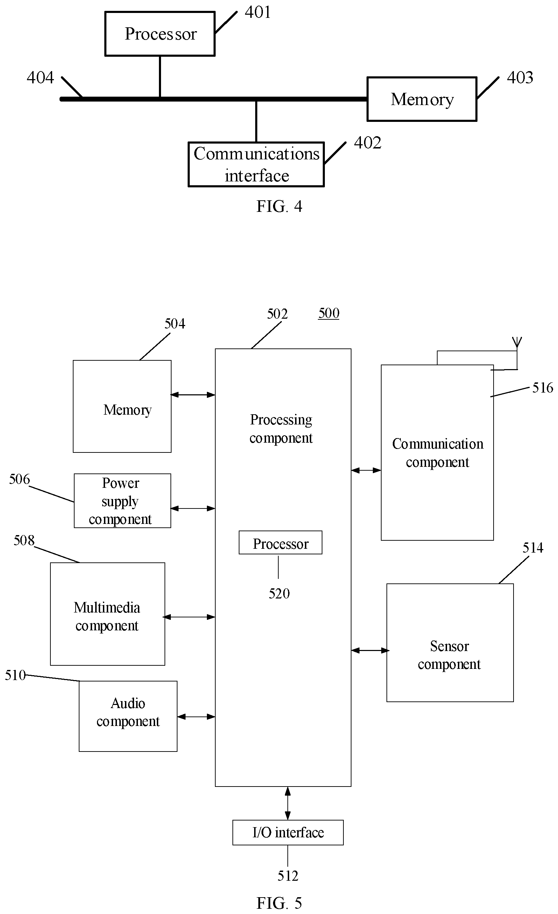

The present disclosure further provides an electronic device, which may be implemented as a client. As shown in FIG. 4, the electronic device includes a processor 401, a communications interface 402, a memory 403, and a communications bus 404. The processor 401, the communications interface 402, and the memory 403 communicate with each other through the communications bus 404.

The memory 403 is configured to store a computer program.

The processor 401 is configured to implement the following steps when executing the program stored in the memory 403:
encoding complexity of a target video is determined.

A target encoding parameter corresponding to difference information between the encoding complexity and a reference threshold is determined based on the difference information.

The target video is encoded based on the target encoding parameter, and an encoded target video is uploaded to a server.

The communications bus in the electronic device may be a peripheral component interconnect (PCI) bus, an extended industry standard architecture (EISA) bus, or the like. The communications bus may be classified as an address bus, a data bus, a control bus, or the like. For ease of representation, only one thick line is used to represent the communications bus in the figure, but this does not mean that there is only one bus or only one type of bus.

The communications interface is used for communication between the foregoing client and another device.

The memory may include a random access memory (RAM), or a non-volatile memory, for example, at least one magnetic disk memory. Optionally, the memory may alternatively be at least one storage apparatus located far away from the foregoing processor.

The processor may be a general-purpose processor, including a central processing unit (CPU), a network processor (NP), or the like; or may be a digital signal processor (DSP), an application-specific integrated circuit (ASIC), a field-programmable gate array (FPGA), another programmable logic device (PLD), a discrete gate or transistor logic device, or a discrete hardware component.

In another embodiment of the present disclosure, a computer-readable storage medium is further provided. The computer-readable storage medium stores a computer program. When The computer program is executed by a processor, any one of the steps of the foregoing video upload method is implemented.

In another embodiment of the present disclosure, a computer program product containing an instruction is further provided. When the instruction is run on a computer, the computer is enabled to perform any one of the steps of the video upload method in the foregoing method embodiments.

FIG. 5 is a block diagram of a video upload apparatus 500 according to an exemplary embodiment. For example, the apparatus 500 may be a mobile phone, a computer, a digital broadcast terminal, a message transmit-receive device, a gaming console, a tablet device, a medical device, a fitness device, a personal digital assistant, or the like.

Referring to FIG. 5, the apparatus 500 may include one or more of the following components: a processing component 502, a memory 504, a power supply component 506, a multimedia component 508, an audio component 510, an input/output (I/O) interface 512, a sensor component 514, and a communication component 516.

The processing component 502 typically controls the overall operation of the apparatus 500, for example, operations associated with display, phone calls, data communications, camera operations, and recording operations. The processing component 502 may include one or more processors 520 to execute instructions to complete all or some of the steps of the foregoing method. In addition, the processing component 502 may include one or more modules that facilitate interaction between the processing component 502 and other components. For example, the processing component 502 may include a multimedia module to facilitate interaction between the multimedia component 508 and the processing component 502.

The memory 504 is configured to store various types of data to support operations on the apparatus 500. Examples of such data include instructions for any application or method operating on the apparatus 500, contact data, phone book data, messages, images, videos, and the like. The memory 504 may be implemented by any type of volatile or non-volatile storage device or a combination thereof, such as a static RAM (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc.

The power supply component 506 supplies power to various components of the apparatus 500. The power supply component 506 may include a power management system, one or more power supplies, and other components associated with power generation, management, and distribution for the apparatus 500.

The multimedia component 508 includes a screen providing an output interface between the apparatus 500 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensors may not only sense the boundaries of the touch or swipe action, but also detect the duration and pressure associated with the touch or swipe action. In some embodiments, the multimedia component 508 includes a front-facing camera and/or a rear-facing camera. The front-facing camera and/or the rear-facing camera can receive external multimedia data when the apparatus 500 is in an operating mode, such as a shooting mode or a video mode. Each front-facing camera and rear-facing camera may be a fixed optical lens system or have a focal length and optical zoom capability.

The audio component 510 is configured to output and/or input audio signals. For example, the audio component 510 includes a microphone (MIC) configured to receive external audio signals when the apparatus 500 is in an operating mode, such as a call mode, a recording mode, and a voice recognition mode. The received audio signals may be further stored in the memory 504 or sent via the communication component 516. In some embodiments, the audio component 510 may further include a speaker for outputting audio signals.

The I/O interface 512 provides an interface between the processing component 502 and a peripheral interface module, wherein the peripheral interface module may be a keyboard, a click wheel, a button, or the like. The buttons may include, but are not limited to: a home button, a volume button, a start button, and a lock button.

The sensor component 514 includes one or more sensors for providing status assessment of various aspects of the apparatus 500. For example, the sensor component 514 may detect an on/off state of the apparatus 500 and relative positions of the components. For example, the components are a display and a keypad of the apparatus 500. The sensor component 514 may further detect position changes of the apparatus 500 or a component of the apparatus 500, presence or absence of contact between the user and the apparatus 500, positions or acceleration/deceleration of the apparatus 500, and temperature changes of the apparatus 500. The sensor component 514 may include a proximity sensor configured to detect the presence of nearby objects without any physical contact. The sensor component 514 may further include an optical sensor, such as a complementary metal-oxide-semiconductor (CMOS) or charge-coupled device (CCD) image sensor, for use in imaging applications. In some embodiments, the sensor component 514 may further include an acceleration sensor, a gyroscope sensor, a magnetic sensor, a pressure sensor, or a temperature sensor.

The communication component 516 is configured to facilitate communication between the apparatus 500 and other devices by wired or wireless means. The apparatus 500 may access a wireless network based on a communication standard, such as wireless fidelity (Wi-Fi), a carrier network (for example, 2G, 3G, 4G, or 5G), or a combination thereof. In an exemplary embodiment, the communication component 516 may receive broadcast signals or broadcast-related information from an external broadcast management system over a broadcast channel. In an exemplary embodiment, the communication component 516 may further include a near-field communication (NFC) module to facilitate short-range communication. For example, the NFC module may be implemented based on the radio frequency identification (RFID) technology, infrared data association (IrDA) technology, ultra-wideband (UWB) technology, Bluetooth (BT) technology, and other technologies.

In an exemplary embodiment, the apparatus 500 may be implemented by one or more ASICs, DSPs, digital signal processing devices (DSPDs), PLDs, FPGAs, controllers, microcontrollers, microprocessors, or other electronic elements for performing any one of the steps of the foregoing video upload method.

In an exemplary embodiment, a storage medium including an instruction may be further provided, such as the memory 504 including an instruction. The instruction may be executed by the processor 520 of the apparatus 500 to perform the foregoing method. Optionally, the storage medium may be a non-transitory computer-readable storage medium, for example, the non-transitory computer-readable storage medium may be a read-only memory (ROM), a random access memory (RAM), a compact disc read-only memory (CD-ROM), a magnetic tape, a floppy disk, an optical data storage device, or the like.

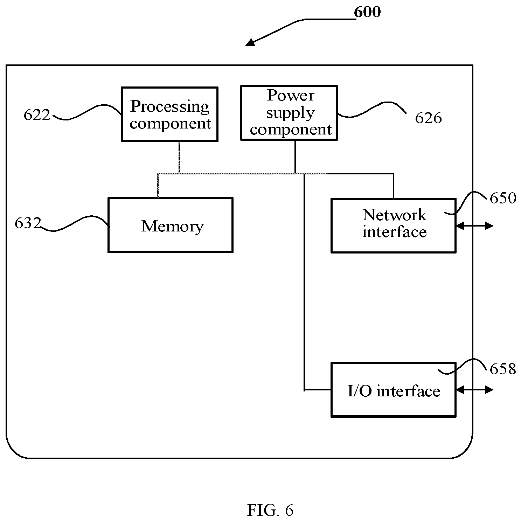

FIG. 6 is a block diagram of a video upload apparatus 600 according to an exemplary embodiment. For example, the apparatus 600 may be provided as a client. Referring to FIG. 6, the apparatus 600 includes a processing component 622, which further includes one or more processors; and a memory resource represented by a memory 632, for storing instructions executable by the processing component 622, such as an application program. The application program stored in the memory 632 may include one or more modules each corresponding to a set of instructions. In addition, the processing component 622 is configured to execute the instructions to perform any one of the steps of the foregoing video upload method.

The apparatus 600 may further include a power supply component 626 configured to perform power management of the apparatus 600, a wired or wireless network interface 650 configured to connect the apparatus 600 to a network, and an I/O interface 658. The apparatus 600 can operate based on an operating system stored in the memory 632, such as Windows Server, Mac OS X, Unix, Linux, and FreeBSD.

Those skilled in the art may easily figure out other implementations of the present disclosure after considering the specification and practicing the present disclosure. The present disclosure is intended to cover any variations, purposes, or applicable changes of the present disclosure. Such variations, purposes, or applicable changes follow the general principle of the present disclosure and include common knowledge or conventional technical means in the technical field which is not disclosed in the present disclosure. The specification and embodiments are merely considered as illustrative, and the real scope and spirit of the present disclosure are pointed out by the appended claims.

It should be noted that, the present disclosure is not limited to the precise structures that have been described above and shown in the accompanying drawings, and can be modified and changed in many ways without departing from the scope of the present disclosure. The scope of the present disclosure is defined by the appended claims.

## Claims

1. A video upload method, applied to a client and comprising:
determining encoding complexity of a target video;
determining a target encoding parameter corresponding to difference information based on the difference information between the encoding complexity and a reference threshold; and
encoding the target video based on the target encoding parameter and uploading an encoded target video to a server.

2. The video upload method according to claim 1, wherein the determining the encoding complexity of the target video comprises:
obtaining hardware encoded data of the target video;
decoding the hardware encoded data of the target video to obtain original video data of the target video; and
determining encoding complexity during encoding the original video data of the target video.

3. The video upload method according to claim 2, wherein the determining the encoding complexity during encoding the original video data of the target video comprises:
obtaining an initial encoding parameter for the target video;
performing inter-frame predictive encoding and intra-frame predictive encoding on the target video based on the initial encoding parameter; and
determining the encoding complexity of the target video based on an inter-frame predictive encoding result and an intra-frame predictive encoding result.

4. The video upload method according to claim 3, wherein the initial encoding parameter is set based on historical encoding parameters.

5. The video upload method according to claim 3, wherein the determining the encoding complexity of the target video based on the inter-frame predictive encoding result and the intra-frame predictive encoding result comprises:
determining inter-frame predictive encoding complexity of the target video based on the inter-frame predictive encoding result;
determining intra-frame predictive encoding complexity of the target video based on the intra-frame predictive encoding result; and
performing weighted summation on the inter-frame predictive encoding complexity and intra-frame predictive encoding complexity of the target video based on a preset first weight of the inter-frame predictive encoding complexity and a preset second weight of the intra-frame predictive encoding complexity to obtain the encoding complexity of the target video.

6. The video upload method according to claim 1, wherein the determining the target encoding parameter corresponding to the difference information based on the difference information between the encoding complexity and the reference threshold comprises:
obtaining the target encoding parameter corresponding to the difference information from a plurality of encoding parameters based on the difference information between the encoding complexity and the reference threshold.

7. The video upload method according to claim 6, wherein the obtaining the target encoding parameter corresponding to the difference information from the plurality of encoding parameters based on the difference information between the encoding complexity and the reference threshold comprises:
obtaining difference intervals corresponding to the plurality of encoding parameters; and
determining an encoding parameter corresponding to a difference interval comprising the difference information as the target encoding parameter.

8. The video upload method according to claim 1, before the determining the target encoding parameter corresponding to the difference information based on the difference information between the encoding complexity and the reference threshold, further comprising:
determining difference information between the encoding complexity and the reference threshold.

9. A video upload apparatus, applied to a client and comprising:
a determining unit, configured to determine encoding complexity of a target video;
a comparison unit, configured to determine a target encoding parameter corresponding to difference information based on the difference information between the encoding complexity and a reference threshold; and
an upload unit, configured to encode the target video based on the target encoding parameter and upload an encoded target video to a server.

10. The video upload apparatus according to claim 9, wherein
the determining unit is configured to obtain hardware encoded data of the target video; decode the hardware encoded data of the target video to obtain original video data of the target video; and determine encoding complexity during encoding the original video data of the target video.

11. The video upload apparatus according to claim 10, wherein
the determining unit is configured to obtain an initial encoding parameter for the target video; perform inter-frame predictive encoding and intra-frame predictive encoding on the target video based on the initial encoding parameter; and determine the encoding complexity of the target video based on an inter-frame predictive encoding result and an intra-frame predictive encoding result.

12. The video upload apparatus according to claim 11, wherein the initial encoding parameter is set based on historical encoding parameters.

13. The video upload apparatus according to claim 11, wherein
the determining unit is configured to determine inter-frame predictive encoding complexity of the target video based on the inter-frame predictive encoding result; determine intra-frame predictive encoding complexity of the target video based on the intra-frame predictive encoding result; and perform weighted summation on the inter-frame predictive encoding complexity and intra-frame predictive encoding complexity of the target video based on a preset first weight of the inter-frame predictive encoding complexity and a preset second weight of the intra-frame predictive encoding complexity to obtain the encoding complexity of the target video.

14. The video upload apparatus according to claim 9, wherein
the comparison unit is configured to obtain the target encoding parameter corresponding to the difference information from a plurality of encoding parameters based on the difference information between the encoding complexity and the reference threshold.

15. The video upload apparatus according to claim 14, wherein
the comparison unit is configured to obtain a difference interval corresponding to each encoding parameter; and determining an encoding parameter corresponding to a difference interval comprising the difference information as the target encoding parameter.

16. The video upload apparatus according to claim 9, further comprising:
a difference determining unit, configured to determine difference information between the encoding complexity and the reference threshold.

17. A client, comprising:
a processor; and
a memory configured to store an instruction executable by the processor; wherein
the processor is configured to perform the following steps:
determining encoding complexity of a target video;
determining a target encoding parameter corresponding to difference information based on the difference information between the encoding complexity and a reference threshold; and
encoding the target video based on the target encoding parameter and uploading an encoded target video to a server.

18. The client according to claim 17, wherein the processor is configured to perform the following steps:
obtaining hardware encoded data of the target video;
decoding the hardware encoded data of the target video to obtain original video data of the target video; and
determining encoding complexity during encoding the original video data of the target video.

19. The client according to claim 18, wherein the processor is configured to perform the following steps: obtaining an initial encoding parameter for the target video, wherein the initial encoding parameter is set based on historical encoding parameters;
performing inter-frame predictive encoding and intra-frame predictive encoding on the target video based on the initial encoding parameter; and
determining the encoding complexity of the target video based on an inter-frame predictive encoding result and intra-frame predictive encoding result.

20. The client according to claim 19, wherein the initial encoding parameter is set based on the historical encoding parameters.

21. The client according to claim 19, wherein the processor is configured to perform the following steps:
determining inter-frame predictive encoding complexity of the target video based on the inter-frame predictive encoding result;
determining intra-frame predictive encoding complexity of the target video based on the intra-frame predictive encoding result; and
performing weighted summation on the inter-frame predictive encoding complexity and intra-frame predictive encoding complexity of the target video based on a preset first weight of the inter-frame predictive encoding complexity and a preset second weight of the intra-frame predictive encoding complexity to obtain the encoding complexity of the target video.

22. The client according to claim 17, wherein the processor is configured to perform the following steps:
obtaining the target encoding parameter corresponding to the difference information from a plurality of encoding parameters based on the difference information between the encoding complexity and the reference threshold.

23. The client according to claim 22, wherein the processor is configured to perform the following steps:
obtaining difference intervals corresponding to the plurality of encoding parameters; and
determining an encoding parameter corresponding to a difference interval comprising the difference information as the target encoding parameter.

24. The client according to claim 17, wherein the processor is further configured to perform the following steps:
determining difference information between the encoding complexity and the reference threshold.

25. A storage medium, wherein when an instruction in the storage medium is executed by a processor of a client, the client is enabled to perform the following steps:
determining encoding complexity of a target video;
determining a target encoding parameter corresponding to difference information based on the difference information between the encoding complexity and a reference threshold; and
encoding the target video based on the target encoding parameter and uploading an encoded target video to a server.
